# EUROPÄISCHE PATENTSCHRIFT

(11) **EP 2 076 346 B1**
(45) Veröffentlichungstag und Bekanntmachung des Hinweises auf die Patenterteilung: **24.11.2010**
(21) Anmeldenummer: 07820351.0
(22) Anmeldetag: 19.09.2007
(51) Int. Cl.: B23B 51/04, B23C 5/10

(54) **WERKZEUG ZUR SPANENDEN BEARBEITUNG VON WERKSTÜCKEN**
TOOL FOR MACHINING WORKPIECES
OUTIL POUR L'USINAGE PAR ENLÈVEMENT DE COPEAUX DE PIÈCES À USINER

(30) Priorität: 05.10.2006 DE 102006047496
(43) Veröffentlichungstag der Anmeldung: 08.07.2009
(73) Patentinhaber: WALTER AG, 72072 Tübingen (DE)
(72) Erfinder: FAUSER, Lothar, 72147 Nehren (DE)
(74) Vertreter: WSL Patentanwälte
(86) Internationale Anmeldenummer: PCT/EP2007/059907
(87) Internationale Veröffentlichungsnummer: WO 2008/040638

(56) Entgegenhaltungen:
- EP-A- 1 344 595
- DE-A1-102005 009 030
- GB-A- 1 222 029
- GB-A- 1 562 229

## Beschreibung

Die vorliegende Erfindung betrifft ein Werkzeug zur spanenden Bearbeitung von Werkstücken mit einem Schaft und einem Schneidteil, wobei das Schneidteil einen den Nenndurchmesser des Werkzeugs definierenden Schneidkantenabschnitt oder einen Plattensitz für einen Schneideinsatz mit einem den Nenndurchmesser des Werkzeugs definierenden Schneidkantenabschnitt aufweist und wobei das Werkzeug eine Drehachse aufweist, um die das Werkzeug im funktionsfähig montierten Zustand rotiert.

Aus dem Stand der Technik sind drehende Werkzeuge zur spanenden Bearbeitung von Werkstücken, insbesondere Bohrer, Fräser und ähnliches bekannt. Diese Werkzeuge weisen eine oder mehrere Schneidkanten auf, mit welchen das zu bearbeitende Werkstück spanend abgetragen wird. Dabei rotieren die Schneidkanten im Betrieb um die Drehachse des Werkzeugs.

Die aus dem Stand der Technik bekannten Werkzeuge weisen einen Schaft auf, mit welchem das Werkzeug in dem dafür vorgesehenen Futter der Maschine aufnehmbar ist. Zu diesem Zweck ist der Schaft zumeist normgerecht ausgestaltet und weist einen Außendurchmesser auf, der dem Innendurchmesser des Werkzeugfutters im wesentlichen entspricht.

Dabei sind die Futter der Maschinen typischerweise genormt und in dem ansonsten zylindrischen Grundkörper des Werkzeugschafts sind Vertiefungen und Abplattungen vorgesehen, um eine Klemmung des Werkzeugs im Futter zu ermöglichen und darüber hinaus eine formschlüssige Drehmomentübertragung von der Maschine auf das Werkzeug zu gewährleisten.

Solche Befestigungsmöglichkeiten sind Gegenstand der britischen Patentschrift GB 1 222 029, die einen Bohrer mit einem Schraubgewinde und einen zur Klemmung in einem Bohrfutter vorgesehenen Schaftabschnitt offenbart. Durch die Bereitstellung zweier Befestigungsmittel wird eine universelle Verwendung mit einer Vielzahl von Maschinen gewährleistet. Nicht gezeigt wird dabei ein als Referenzdurchmesser dienender Schaftabschnitt im Sinne der vorliegenden Erfindung.

Um es im laufenden Betrieb beim Wechseln der Werkzeuge zu ermöglichen, den Nenndurchmesser des Werkzeugs zu bestimmen, sind im Bereich des Schaftes typischerweise numerische Werte, welche den Nenndurchmesser des Werkzeugs angeben, eingeprägt, eingraviert oder aufgedruckt. Diese Kennzeichnungen werden jedoch bei häufigem Wechsel des Werkzeugs, welches mit einem Einfügen oder Entnehmen des Werkzeugs aus dem Werkzeugfutter verbunden ist, abgerieben oder plangeschliffen. Daher ist nach einer gewissen Standzeit des Werkzeugs beispielsweise für einen Meister vor Ort, nicht mehr erkennbar, welchen Nenndurchmesser das betreffende Werkzeug aufweist.

In diesem Fall muß der Nenndurchmesser des Werkzeugs durch Messen bestimmt werden. Dabei wird beispielsweise mit Hilfe einer Schieblehre, der maximale Durchmesser des Werkzeugs durch Anlegen der Lehre an zwei diametral, d.h. in Bezug auf die Drehachse des Werkzeugs um 180°, gegenüberliegenden Schneidkanten gemessen. Die Messung des maximalen Durchmessers auf diese einfache Weise im Betrieb, d.h. an der Werkbank, ist jedoch nur möglich bei einer symmetrischen Verteilung der Schneidkanten, bei denen zumindest zwei diametral gegenüberliegende, im wesentlichen parallel zur Drehachse verlaufende Schneidkanten vorgesehen sind. Selbst dann ist aber eine solche Messung häufig ungenau, weil der Nenndurchmesser des Werkzeugs oft nur durch Schneidecken definiert wird und eine Schieblehre oder dergleichen leicht verkantet an den Schneidecken angesetzt werden kann.

Bei Werkzeugen, die nur eine Schneidkante oder aber eine asymmetrische Anordnung mehrerer Schneidkanten aufweisen, so dass sich keine diametral gegenüberliegenden axialen Schneidkantenabschnitte ergeben, ist eine solche einfache Bestimmung des Nenndurchmessers des Werkzeugs ohnehin nicht möglich. In diesen Fällen muß die Messung des Nenndurchmessers mit Hilfe komplexer Prüfgeräte zur optischen oder mechanischen Erfassung der Werkzeugabmessungen erfolgen.

Gegenüber diesem Stand der Technik liegt der vorliegenden Erfindung die Aufgabe zugrunde, ein Werkzeug mit einer oder mit mehreren Schneidkanten bereitzustellen, welches eine einfache Messung des Nenndurchmessers ermöglicht.

Diese Aufgabe wird erfindungsgemäß dadurch gelöst, dass ein Werkzeug zur spanenden Bearbeitung von Werkstücken bereitgestellt wird, mit einem Schaft und einem Schneidteil, wobei das Schneidteil einen den Nenndurchmesser des Werkzeugs definierenden Schneidkantenabschnitt oder einen Plattensitz für einen Schneideinsatz mit einem den Nenndurchmesser des Werkzeugs definierenden Schneidkantenabschnitt aufweist und wobei das Werkzeug eine Drehachse aufweist, um die das Werkzeug im funktionsfähig montierten Zustand rotiert, wobei das Werkzeug zumindest einen sich axial erstreckenden Abschnitt aufweist, der in axialer Richtung außerhalb des den Nenndurchmesser definierenden Schneidkantenabschnitts angeordnet ist und innerhalb dessen in einer Ebene senkrecht zur Drehachse mindestens zwei Umfangsabschnitte vorgesehen sind, die in Bezug auf die Drehachse diametral gegenüberliegend voneinander angeordnet sind, so dass ein Referenzdurchmesser gebildet wird, wobei der Referenzdurchmesser gleich dem Nenndurchmesser des Werkzeugs ist, wobei im Bereich des Schaftes ein Abschnitt für die Aufnahme des Werkzeuges in einem genormten Werkzeughalter einer Maschine vorgesehen ist, wobei der Durchmesser des Aufnahmeabschnittes von dem Nenndurchmesser des Werkzeuges verschieden ist, wobei der axiale Abschnitt gegenüber dem restlichen Werkzeug abgesetzt ist, wobei die an den axialen Abschnitt mit dem Referenzdurchmesser anschließenden Bereiche des Werkzeuges einen anderen Durchmesser als den Referenzdurchmesser aufweisen. Der an dem Werkzeug auf diese Weise vorgesehene Referenzdurchmesser ermöglicht es, mit Hilfe einer Schieblehre den Nenndurchmesser insbesondere solcher Werkzeuge präzise zu bestimmen, die nur genau einen den Nenndurchmesser definierenden Schneidkantenabschnitt aufweisen oder bei welchen mehr als ein den Nenndurchmesser definierender Schneidkantenabschnitt vorgesehen ist, wobei die Schneidkanten so angeordnet sind, dass sie keine Abschnitte aufweisen, die in einer zur Drehachse senkrechten Ebene in Bezug auf die Drehachse diametral gegenüberliegend angeordnet sind. Bei solchen Werkzeugen ist ohne den erfindungsgemäßen Referenzdurchmesser eine Bestimmung des Nenndurchmessers des Werkzeugs mit einer einfachen Schieblehre nicht möglich.

Darüber hinaus ermöglicht der erfindungsgemäße Referenzdurchmesser auch eine einfachere Bestimmung des Nenndurchmessers von Werkzeugen, welche zwei diametral gegenüberliegende Schneidkantenabschnitte aufweisen. Da der Referenzdurchmesser in axialer Richtung außerhalb des den Nenndurchmesser definierenden Schneidkantenabschnitts am Werkzeug angeordnet ist, unterlieg dieser keiner oder nur geringer Abnutzung und Veränderung über die Standzeit des Werkzeugs hinweg.

Dabei wird in dieser Anmeldung unter dem Nenndurchmesser des Werkzeugs der maximale Außendurchmesser der im wesentlichen zur Drehachse parallelen Schneidkanten oder der Schneidekken des Werkzeugs bei einer Rotation des Werkzeugs um die Drehachse verstanden. Dieser stimmt bei einem Bohrwerkzeugs, im Idealfall genau mit dem Innendurchmesser der durch das Werkzeug erzeugten Bohrung überein.

Dabei wird hier und im folgenden unter einem "den Nenndurchmesser definierenden Schneidkantenabschnitt" ein im wesentlichen axial verlaufender Abschnitt einer Schneidkante, aber auch eine Schneidecke, welche den maximalen Außendurchmesser des Werkzeugs bestimmen, verstanden. Bei Bohrwerkzeugen und Stimfräsern definieren typischerweise jeweils nur die Schneidecken, welche den Übergangsbereich zwischen den an der Spitze des Werkzeugs angeordneten Hauptschneidkanten und den im wesentlichen in axialer Richtung verlaufenden Nebenschneidkanten bilden, den Nenndurchmesser des Werkzeugs.

Es ist offensichtlich, daß der erfindungsgemäße Referenzdurchmesser nicht nur für Werkzeuge geeignet ist, die Schneidkanten bzw. Schneidkantenabschnitte aufweisen, die integral mit dem Werkzeugkörper verbunden sind, sondern auch für Werkzeuge, die Plattensitze für einen oder mehrere Schneideinsätze aufweisen, wobei die Schneidkantenabschnitte an den in dem Plattensitz anzubringenden Schneideinsätzen vorgesehen sind und einen eindeutigen Nenndurchmesser definieren.

In einer besonders bevorzugten Ausführungsform ist der axiale Abschnitt mit dem Referenzdurchmesser im Bereich des Schaftes des Werkzeugs angeordnet. Auf diese Weise tritt der axiale Abschnitt mit dem Referenzdurchmesser im Betrieb nicht mit dem Werkstück in Eingriff und es kommt auch bei langen Standzeiten des Werkzeugs nicht zu einer Änderung des Referenzdurchmessers, beispielsweise durch Beschädigung. Dabei ist es insbesondere zweckmäßig, wenn der Referenzdurchmesser im Bereich des Schaftes außerhalb des Kupplungsbereiches, der zur Aufnahme des Werkzeugs im Werkzeughalter der Maschine dient, angeordnet ist. Auf diese Weise werden auch Beschädigungen und damit Änderungen des Referenzdurchmessers vermieden die durch das I-neingriffkommen des Werkzeugs mit dem Werkzeughalter hervorgerufen werden können.

In einer bevorzugten Ausführungsform liegen die Unfangsabschnitte, welche den Referenzdurchmesser definieren, auf einer gemeinsamen Zylinderfläche. Insbesondere kann der Referenzdurchmesser durch eine einzige Zylinderfläche gebildet werden, die effektiv in jeder radialen Richtung ein Paar von Umfangsabschnitten aufweist, welche jeweils den Referenzdurchmesser definieren. Jedoch sind auch Ausführungsformen denkbar, bei welchen der Referenzdurchmesser durch zwei diametral gegenüberliegende, parallele ebene Flächen, gebildet wird, wobei mehrere derartige parallele Flächen einen um den Werkzeugschaft umlaufenden Polygonzug definieren können. Auch Mischformen mit teilzylindrischen Abschnitten und ebenen Flächen, gegebenenfalls mit entsprechenden Übergangsflächen, sind denkbar.

Aus dem Stand der Technik sind eine Reihe von genormten Werkzeugaufnahmen für Maschinen bekannt, die mit Werkzeugen zusammenwirken, welche einen entsprechend komplementär ausgestalteten Schaft aufweisen. Die Schäfte zur Aufnahme in den genormten Werkzeugaufnahmen haben dabei einen Durchmesser, welcher durch das System zur Werkzeugaufnahme und nicht durch den Nenndurchmesser des Werkzeugs vorgegeben sind. Daher ist der erfindungsgemäß an einem Werkzeug vorgesehene Abschnitt mit dem Referenzdurchmesser insbesondere für solche Werkzeuge zweckmäßig, bei welchen der Durchmesser des Schaftes in dem für die Aufnahme vorgesehenen Bereich von dem Nenndurchmesser des Werkzeugs unabhängig und insbesondere von diesem verschieden ist.

Besonders bevorzugt ist eine Ausführungsform der Erfindung, bei welcher der axiale Abschnitt, der den Referenzdurchmesser bildet, gegenüber dem restlichen Werkzeug abgesetzt ist, wobei vorzugsweise die an den axialen Abschnitt mit dem Referenzdurchmesser anschließenden Bereiche des Werkzeuges einen anderen Durchmesser als den Referenzdurchmesser aufweisen. Eine solche Anordnung ermöglicht es einem Benutzer vor Ort, den Referenzdurchmesser am Werkzeug eindeutig zu identifizieren und das Meßinstrument, beispielsweise eine Schieblehre, richtig anzulegen. Dabei kann der Referenzdurchmesser gegenüber den angrenzenden Abschnitten des Werkzeugs vorspringen oder beispielsweise in Form einer Nut eingelassen sein. Es sind Ausführungsformen bevorzugt, bei welchen der Referenzdurchmesser in einem Übergangsbereich von einem Durchmesser, welcher geringer ist als der Referenzdurchmesser zu einem Durchmesser, welcher größer ist als der Referenzdurchmesser, angeordnet ist.

Um ein einfaches Anlegen des Meßwerkzeugs zu gewährleisten, ist es zweckmäßig, wenn der axiale Abschnitt, der den Referenzdurchmesser bildet, eine Breite bzw. Höhe in axialer Richtung von 1 mm bis 5 mm, vorzugsweise von 2 mm aufweist.

Weitere Vorteile, Merkmale und Anwendungsmöglichkeiten der vorliegenden Erfindung werden anhand der folgenden Beschreibung einer bevorzugten Ausführungsform und der dazugehörigen Figuren deutlich.
- Figur 1: zeigt eine Seitenansicht eines erfindungsgemäßen Bohrwerkzeugs.
- Figur 2: zeigt eine Schnittansicht durch das Bohrwerkzeug aus Figur 1.
- Figur 3: zeigt einen vergrößerten Ausschnitt des Referenzdurchmessers aus Figur 2.

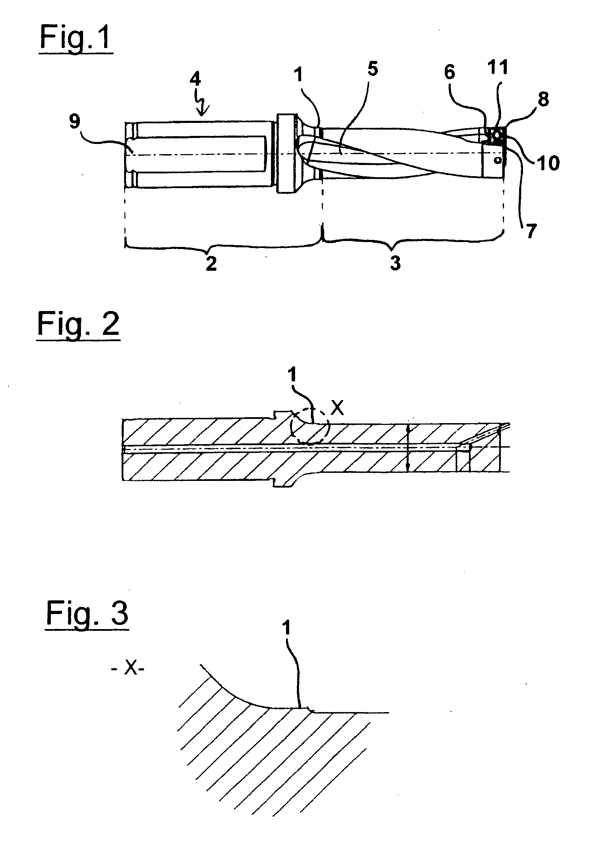

In Figur 1 ist eine seitliche Ansicht eines Bohrers dargestellt, welcher den erfindungsgemäßen Abschnitt 1 mit dem Referenzdurchmesser aufweist. Das Bohrwerkzeug besteht aus einem Schaft 2 sowie einem Schneidteil 3. Der Schaft 2 wiederum weist einen Abschnitt 4 auf, der zur Aufnahme im Futter einer Werkzeugmaschine vorgesehen ist. Das dargestellte Schneidteil 3 zeigt Spannuten 5, die zur Spanabfuhr aus dem Bohrloch dienen. Am vorderen Ende des Schneidteils 3 ist ein einziger Plattensitz 6 für einen Schneideinsatz 7 vorgesehen. Das Werkzeug mit dem montierten Schneideinsatz 7 weist daher nur eine einzige, den Nenndurchmesser definierende Schneidecke 8 auf.. Diese Schneidecke 8 bildet den Übergang zwischen der Hauptschneidkante 10 und der Nebenschneidkante 11 des Schneideinsatzes 7.

Der Nenndurchmesser des Bohrers wird durch die maximale Umfangslinie der Schneidecke 8 bei Rotation des Bohrers um die Drehachse 9 definiert. Am vorderen, dem Schneidteil 3 zugewandten Ende des Schafts 2 ist ein Abschnitt 1 vorgesehen, der den Nenndurchmesser des Bohrwerkzeugs aufweist. In diesem Bereich 1 läßt sich mit Hilfe einer Schieblehre der Nenndurchmesser des Bohrers messen, obwohl dieser an seiner Spitze nur eine einzige den Nenndurchmesser des Bohrers definierende Schneidecke 8 trägt.

Die Anordnung des Abschnitts 1 mit dem Referenzdurchmesser ist nochmals deutlich in Figur 2 zu erkennen. Figur 3 stellt eine vergrößerte Ausschnittsansicht des mit X bezeichneten Bereichs des Bohrers aus Figur 2 dar. In dieser Vergrößerung ist deutlich zu sehen, daß der Abschnitt 1 mit dem Referenzdurchmesser in einem Übergangsbereich des Bohrers von einem geringeren Durchmesser im Bereich des Schneidteils 3 hin zu einem größeren Durchmesser des Bohrwerkzeugs im Bereich des Schaftes 2 angeordnet ist.

Der Abschnitt 1 mit dem Referenzdurchmesser ist in dem in den Schaft 2 des Werkzeugs hineinreichenden Auslaufbereich der Spannuten 5 angeordnet. Auf diese Weise kann der Abschnitt 1 im Betrieb weder durch das mit dem Aufnahmebereich 4 in Eingriff kommende Futter der Maschine noch durch das mit dem Schneidteil in Eingriff kommende Werkstück beschädigt oder verändert werden.

In der dargestellten bevorzugten Ausführungsform weist der Abschnitt 1 des Schaftes mit dem Nenndurchmesser eine Breite in axialer Richtung von 2 mm auf. Dies gewährleistet ein einfaches Anlegen der Backen einer Schieblehre an den axialen Abschnitt 1 mit dem Referenzdurchmesser.

### Bezugszeichenliste

- 1: Abschnitt mit Referenzdurchmesser
- 2: Schaft
- 3: Schneidteil
- 4: Abschnitt zur Aufnahme im Futter einer Werkzeugmaschine
- 5: Spannuten
- 6: Plattensitz
- 7: Schneideinsatz
- 8: Schneidkante
- 9: Drehachse
- 10: Hauptschneidkante
- 11: Nebenschneidkante

## Patentansprüche

1. Werkzeug zur spanenden Bearbeitung von Werkstücken mit einem Schaft (2) und einem Schneidteil (3), wobei das Schneidteil (3) einen den Nenndurchmesser des Werkzeugs definierenden Schneidkantenabschnitt (8) oder einen Plattensitz (6) für einen Schneideinsatz (7) mit einem den Nenndurchmesser des Werkzeugs definierenden Schneidkantenabschnitt (8) aufweist und wobei das Werkzeug eine Drehachse (9) aufweist, um die das Werkzeug im funktionsfähig montierten Zustand rotiert, wobei das Werkzeug zumindest einen sich axial erstreckenden Abschnitt (1) aufweist, der in axialer Richtung außerhalb des den Nenndurchmesser definierenden Schneidkantenabschnitts (8) angeordnet ist und innerhalb dessen in einer Ebene senkrecht zur Drehachse mindestens zwei Umfangsabschnitte vorgesehen sind, die in Bezug auf die Drehachse diametral gegenüberliegend voneinander angeordnet sind, so dass ein Referenzdurchmesser gebildet wird, wobei der Referenzdurchmesser gleich dem Nenndurchmesser des Werkzeugs ist, **dadurch gekennzeichnet, dass** im Bereich des Schaftes (2) ein Abschnitt (4) für die Aufnahme des Werkzeuges in einem genormten Werkzeughalter einer Maschine aufweist, wobei der Durchmesser des Aufnahmeabschnittes (4) von dem Nenndurchmesser des Werkzeuges verschieden ist, wobei der axiale Abschnitt (1) gegenüber dem restlichen Werkzeug abgesetzt ist, wobei die an den axialen Abschnitt (1) mit dem Referenzdurchmesser anschließenden Bereiche des Werkzeuges einen anderen Durchmesser als den Referenzdurchmesser aufweisen.

2. Werkzeug nach Anspruch 1, **dadurch gekennzeichnet, dass** es genau einen Schneidkantenabschnitt, welcher den Nenndurchmesser des Werkzeugs definiert, oder genau einen Plattensitz (6) für einen Schneideinsatz (7) mit genau einem Schneidkantenabschnitt, welcher den Nenndurchmesser des Werkzeugs definiert, aufweist.

3. Werkzeug nach Anspruch 1, **dadurch gekennzeichnet, dass** es mehr als einen, den Nenndurchmesser des Werkzeugs definierenden Schneidkantenabschnitt oder mehr als einen Plattensitz (6) für einen Schneideinsatz (7) aufweist, wobei die Schneidkantenabschnitte (8) so angeordnet sind, dass sie keine Abschnitte aufweisen, die in einer zur Drehachse (9) senkrechten Ebene in Bezug auf die Drehachse (9) diametral gegenüberliegend angeordnet sind.

4. Werkzeug nach einem der Ansprüche 1 bis 3, **dadurch gekennzeichnet, dass** der axiale Abschnitt (1) mit dem Referenzdurchmesser im Bereich des Schaftes (2) angeordnet ist.

5. Werkzeug nach Anspruch 4, **dadurch gekennzeichnet, dass** der axiale Abschnitt (1) mit dem Referenzdurchmesser außerhalb eines für die Aufnahme des Werkzeugs in einem Werkzeughalter einer Maschine vorgesehenen Abschnitts (4) des Schaftes (2) angeordnet ist.

6. Werkzeug nach einem der Ansprüche 1 bis 5, **dadurch gekennzeichnet, dass** der axiale Abschnitt (1) mit dem Referenzdurchmesser auf Höhe eines Endabschnitts von Spannuten (5) oder unmittelbar hinter dem Endabschnitt angeordnet ist.

7. Werkzeug nach einem der Ansprüche 1 bis 6, **dadurch gekennzeichnet, dass** der axiale Abschnitt (1) Kreissymmetrie aufweist.

8. Werkzeug nach einem der Ansprüche 1 bis 7, **dadurch gekennzeichnet, dass** der axiale Abschnitt (1) eine Breite von 1 mm bis 5 mm, vorzugsweise von 2 mm in axialer Richtung aufweist.

## Claims

1. A tool for machining workpieces comprising a shank (2) and a cutting part (3), wherein the cutting part (3) has a cutting edge portion (8) defining the nominal diameter of the tool or an insert seat (6) for a cutting insert (7), having a cutting edge portion (8) defining the nominal diameter of the tool, and wherein the tool has an axis of rotation (9) about which the tool rotates in the operably mounted condition, **characterized in that** the tool has at least one axially extending portion (1) which is arranged in the axial direction outside the cutting edge portion (8) defining the nominal diameter and within which in a plane perpendicular to the axis of rotation there are provided at least two peripheral portions which are arranged in mutually diametrally opposite relationship in relation to the axis of rotation so that a reference diameter is formed, wherein the reference diameter is equal to the nominal diameter of the tool, **characterized in that** in the region of the shank (2) it has a portion (4) for the tool to be received in a standardized tool holder of a machine, wherein the diameter of the receiving portion (4) is independent of the nominal diameter of the tool, wherein the axial portion (1) is offset with respect to the rest of the tool, wherein the regions of the tool which adjoin the axial portion (1) with the reference diameter are of a different diameter from the reference diameter.

2. A tool as set forth in claim 1 **characterized in that** it has precisely one cutting edge portion which defines the nominal diameter of the tool or precisely one insert seat (6) for a cutting insert (7) with precisely one cutting edge portion defining the nominal diameter of the tool.

3. A tool as set forth in claim 1 **characterized in that** it has more than one cutting edge portion defining the nominal diameter of the tool or more than one insert seat (6) for a cutting insert (7), wherein the cutting edge portions (8) are so arranged that they have no portions which are arranged in mutually diametrally opposite relationship in a plane perpendicularly to the axis of rotation (9) in relation to the axis of rotation (9).

4. A tool as set forth in one of claims 1 through 3 **characterized in that** the axial portion (1) with the reference diameter is arranged in the region of the shank (2).

5. A tool as set forth in claim 4 **characterized in that** the axial portion (1) with the reference diameter is arranged outside a portion (4) of the shank (2), which portion is provided for the tool to be received in a tool holder of a machine.

6. A tool as set forth in one of claims 1 through 5 **characterized in that** the axial portion (1) with the reference diameter is arranged at the level of an end portion of flutes (5) or immediately behind the end portion.

7. A tool as set forth in one of claims 1 through 6 **characterized in that** the axial portion (1) is of circular symmetry.

8. A tool as set forth in one of claims 1 through 7 **characterized in that** the axial portion (1) is of a width of between 1 mm and 5 mm, preferably being 2 mm in the axial direction.

## Revendications

1. Outil d'usinage de pièces, ledit outil comportant une tige (2) et une partie de coupe (3), la partie de coupe (3) possédant une portion d'arête de coupe (8) qui définit le diamètre nominal de l'outil ou un siège de plaquette (6) destiné à un insert de coupe (7) qui possède une portion d'arête de coupe (8) qui définit le diamètre nominal de l'outil et l'outil possédant un axe de rotation (9) autour duquel l'outil tourne dans un état de montage fonctionnel, l'outil comportant au moins une portion (1) qui s'étend axialement et qui est disposée dans une direction axiale à l'extérieur de la portion d'arête de coupe (8) qui définit le diamètre nominal et à l'intérieur de laquelle il est prévu dans un plan perpendiculaire à l'axe de rotation deux portions périphériques qui sont disposées de façon diamétralement opposée par rapport à l'axe de rotation afin de former un diamètre de référence, le diamètre de référence étant égal au diamètre nominal de l'outil, **caractérisé en ce qu'**il comporte dans la région de la tige (2) une portion (4) destinée à recevoir l'outil dans un porte-outil normalisé d'une machine, le diamètre de la portion de réception (4) étant différent du diamètre nominal de l'outil, la portion axiale (1) étant décalée par rapport au reste de l'outil, les régions de l'outil qui se raccordent à la portion axiale (1) ayant le diamètre de référence ayant un diamètre différent du diamètre de référence.

2. Outil selon la revendication 1, **caractérisé en ce qu'**il comporte exactement une portion d'arête de coupe qui définit le diamètre nominal de l'outil, ou exactement un siège de plaquette (6) destiné à un insert de coupe (7) possédant exactement une portion d'arête de coupe qui définit le diamètre nominal de l'outil.

3. Outil selon la revendication 1, **caractérisé en ce qu'**il possède plus d'une portion d'arête de coupe qui définit le diamètre nominal de l'outil ou plus d'un siège de plaquette (6) destiné à un insert de coupe (7), les portions d'arête de coupe (8) étant disposées de façon à ne comporter aucunes portions qui sont disposées de façon diamétralement opposée par rapport à l'axe de rotation (9) dans un plan perpendiculaire à l'axe de rotation (9).

4. Outil selon l'une des revendications 1 à 3, **caractérisé en ce que** la portion axiale (1) ayant le diamètre de référence est disposée dans la région de la tige (2).

5. Outil selon la revendication 4, **caractérisé en ce que** la portion axiale (1) ayant le diamètre de référence est disposée à l'extérieur d'une portion (4) de la tige (2), laquelle portion est destinée à recevoir l'outil dans un porte-outil d'une machine.

6. Outil selon l'une des revendications 1 à 5, **caractérisé en ce que** la portion axiale (1) ayant le diamètre de référence est disposée à hauteur d'une portion d'extrémité de rainures à copeaux (5) ou juste en arrière de la portion d'extrémité.

7. Outil selon l'une des revendications 1 à 6, **caractérisé en ce que** la portion axiale (1) présente une symétrie de révolution.

8. Outil selon l'une des revendications 1 à 7, **caractérisé en ce que** la portion axiale (1) a une largeur de 1 mm à 5 mm, avantageusement de 2 mm dans une direction axiale.
